Europäisches Patentamt

(19) European Patent Office

Office européen des brevets

(11) Publication number: **0 146 252**
**B1**

(12) **EUROPEAN PATENT SPECIFICATION**

(45) Date of publication of patent specification: **19.04.89**

(21) Application number: **84307622.5**

(22) Date of filing: **05.11.84**

(51) Int. Cl.⁴: **F 16 J 15/48,** E 21 B 10/60,
E 21 B 10/62, B 23 F 3/00

(54) Leak-proof, high pressure, high velocity, fluid jet cutting nozzle assembly.

(30) Priority: **08.11.83 US 550232**

(43) Date of publication of application:
**26.06.85 Bulletin 85/26**

(45) Publication of the grant of the patent:
**19.04.89 Bulletin 89/16**

(84) Designated Contracting States:
**AT BE CH DE FR GB IT LI LU NL SE**

(56) References cited:
**GB-A-1 517 769**
**GB-A-1 547 769**
**US-A-3 750 961**
**US-A-4 306 627**

**K. KOLLMAN:"Konstructionsbücher", Vol.17,
No.2, 1975, Springer-Verlag, BERLIN (DE),
Pages 34-38.**

**K.TRUTNOVSKY:Berührungsdichtungen, an
ruhenden und bewegten Maschinenteilen**

(73) Proprietor: **FLOW INDUSTRIES INC.**
**21414-68th Avenue South**
**Kent Washington 98031 (US)**

(72) Inventor: **O'Hanlon, Thomas A.**
**5215 Enetai Avenue N.E.**
**Tacoma Washington 98422 (US)**

(74) Representative: **Hartley, David et al**
**c/o Withers & Rogers 4 Dyer's Buildings Holborn**
**London, EC1N 2JT (GB)**

## Description

The present invention relates to an insert for forming a seal within a fluid passageway, more particularly though not exclusively, to a nozzle assembly such as a fluid cutting jet nozzle assembly, for insertion in a housing means defining a nozzle supply passageway for high pressure fluid.

Mining tools have been developed which utilise high pressure, high velocity, liquid jets to cut and reduce rock to slurry. Typically such mining tools include at least one cutting head having a plurality of fluid jet forming nozzle assemblies. When operated at pressures of over 20,000 psi (138 MPa), the nozzle in each nozzle assembly is made, typically, from a jewel, such as synthetic sapphire, to reduce erosion of the orifice in the nozzle which forms the fluid jet.

Preventing leakage in such a nozzle assembly when operated at such high pressure is critical since a leak will result in the rapid erosion of the nozzle assembly and the cutting head around the point of leakage. This erosion will reduce the nozzle assembly and cutting head to the point of uselessness in a period of time as short as several minutes, depending on the pressures involved and the materials used in the nozzle assembly and cutting head.

Even in nozzles made from jewels, the orifices eventually erode or clog, thereby necessitating replacement or removal of the nozzle for cleaning. Thus, it is important that the nozzle assemblies can be easily removable from the cutting head. However, this needed removability increases the possibility of an undesirable leak each time a nozzle assembly is removed from the replaced in the cutting head. Thus reliable, repeat sealing of the nozzle assembly in the cutting head is essential.

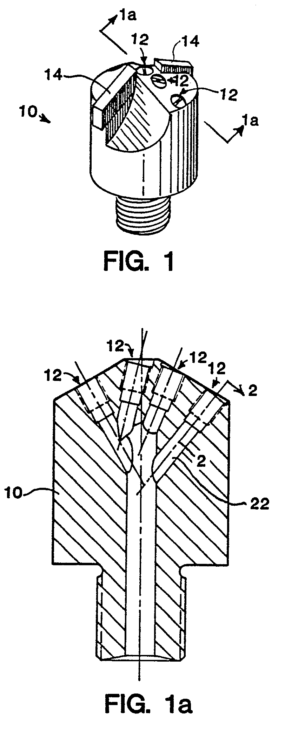

In cutting heads with multiple nozzle assemblies, it is highly desirable that the nozzle assemblies be removable from the exterior of the cutting head, rather than from its interior. This is because such a configuration would likely reduce the cost of the cutting head, and/or the nozzle assemblies, due to increase ease of machining the parts involved; and would likely simplify and reduce the cost of removing and replacing the nozzle assemblies for repair or replacement of the nozzles. In addition, with certain geometries of cutting heads, it might well be physically difficult or impossible to make the nozzle assemblies replaceable from the interior of the cutting head. This will be readily appreciated from a consideration of Fig. 1a.

However, if the cutting head is made so that nozzle assemblies are removable and replaceable from the exterior of the cutting head then the very-high-pressure working fluid within the cutting head tends to force such a nozzle assembly outward, thereby tending to unseat the nozzle assembly seals, and causing catastrophic leaks.

In addition, it is highly desirable that the nozzle assembly, including the nozzle itself, be easily replaceable in the field as a unit, in order to reduce expensive down time of the mining equipment, because the nozzle is, by way of non-limiting example, only .078 nozzle is, by way of non-limiting example, only .078, inches (1.98 mm) in diameter, is hard to handle, and typically has an asymmetric geometry which mandates that it must be placed the correct way up in the nozzle assembly. Field repair would be simplified if the nozzle assembly could be removed and replaced in the field without needing any special tools or equipment other than a common screwdriver or allen wrench.

Objects of the present invention are to provide a leak-proof insert which has all of these desirable features and which solves all of these problems; which is relatively low in cost, both to manufacture and replace; which effectively seals for an extended period of time against pressures of up to at least 60,000 psi (413 MPa); which utilises hydrostatic pressure to form seals which are stronger as the pressure increases, and which when the insert is a nozzle assembly will also provide an accurate, high quality cutting jet.

U.S. 4,306,627 discloses a fluid cutting jet nozzle assembly of the type arranged to be inserted into a fluid supply passageway of a cutting head and comprising:

a) jet-forming means for forming a fluid cutting jet,

b) nozzle body means defining a bore through which said cutting jet passes in use of the jet nozzle assembly;

c) a first snout means extending upstream from said nozzle body means towards said jet-forming means;

d) a second snout means extending upstream from said first snout means towards said jet-forming means and being at least partly of smaller diameter than said first snout means;

e) a deformable sealing sleeve encircling said jet forming means and in use, tending to deform radially inwardly and outwardly under fluid pressure; and

f) mounting means for mounting said nozzle body means in said passageway.

The invention provides such a nozzle assembly characterised in that an annular shoulder is defined at the transition between said first and second snout means, said jet-forming means has an external diameter at least approximately equal to the external diameter of said second snout means, said sealing sleeve being located on said shoulder and encircling said second snout means as well as said jet-forming means whereby in use, said sealing sleeve tends to flow downstream towards said shoulder under the effect of fluid pressure, thereby to form a seal between snout means, jet-forming means and fluid supply passageway.

Creep of the sealing sleeve under hydrostatic pressure can be eliminated by forming a corner in the cutting head, against which the set screw, which has a corresponding chamfer, makes contact downstream from the sealing sleeve.

The sealing effectuated by the sleeve tends to increase as the hydrostatic pressure applied to it increases.

Other features of the present invention are set forth in the appendant claims.

Embodiments of the invention will now be described by way of example with reference to and as illustrated in the accompanying drawings in which:

Figure 1 is a perspective view of a cutting head having a plurality of nozzle assemblies;

Figure 1a is a schematic cross-sectional view taken along line 1a-1a of Figure 1;

Figure 2 is a cross-sectional view, taken along line 2-2 of Figure 1a; and

Figure 3 is a cross-sectional view of another nozzle assembly shown installed in a cutting head.

Figure 1 schematically illustrates a cutting head 10 having a plurality of nozzle assemblies 12 and a plurality of cutter tips 14. Cutting head 10, in operation, is connected to a suitable source of high pressure liquid.

Cutting head 10 and cutter tips 14 are shown simply in an example of a housing in which nozzle assemblies are fitted. One or more nozzle assemblies 12 can be used with any particular cutting head 10, the number shown in Figure 1 being by way of example.

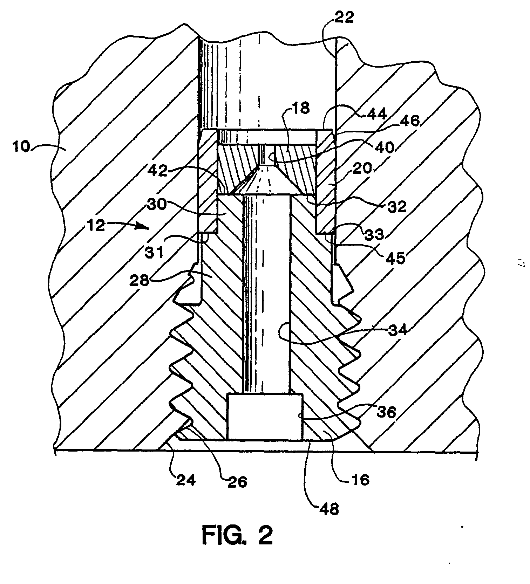

A nozzle assembly 12 is shown in Figure 2 installed in housing means, namely cutting head 10, comprises three parts: nozzle body means, namely set screw 16; jet forming means for forming a liquid cutting jet, namely nozzle 18, and sealing means, namely sleeve 20.

Cutting head 10 defines a nozzle supply passage 22 and a threaded bore 24.

Set screw 16 has a threaded shank 26 sized to threadedly engage bore 24; a first snout 28 of a diameter smaller than the diameter of the nozzle supply passage 22 to permit its entry therein; a second snout 30, smaller in diameter than first snout 28 and terminating in a flat upstream surface 32; a longitudinal bore 34 passing therethrough; a drive recess 36 for being engaged by a drive means, a shoulder 31 formed by the upstream face of first snout 28, and a peripheral corner 33 of shoulder 31.

Nozzle 18 defines a longitudinal bore 40 and a flat surface 42. Sleeve 20 is tubular, and has a peripheral chamfer 46 on its upstream end 44.

Nozzle assembly 12 is assembled by first placing sleeve 20 over the end of second snout 30, so its downstream end 47 is seated on shoulder 31. The nozzle 18 is then inserted into sleeve 20 until its flat surface 42 is firmly against flat surface 32 of set screw 16. Flat surfaces 42,32 form a seal therebetween, while the sleeve 20 seals the peripheries of nozzle 18 and second snout 30. To better effectuate these seals, it is preferred that the diameters and peripheral configurations of snout 30 and nozzle 18 be the same, although they could be different.

Since the internal diameter of sleeve 20 is about the same as, or slightly smaller than the diameter of snout 30 and nozzle 18, it will be appreciated that the sleeve 20 grips both snout 30 and nozzle 18 in a relatively firm friction and/or elastic grip, thereby holding the nozzle assembly 12 together in an assembled relation so it can be handled conveniently as a unit.

Although in Figure 2 sleeve 20 is shown extending upstream from shoulder 31 past the upstream face of nozzle 18, it need not necessarily do so. For example, nozzle 18 could be held in place on set screw 16 by other means such as, for example, with an adhesive and/or by providing a recess in the upstream face 32 of second snout 30 sized to receive nozzle 18, In such event, sleeve 20 could be a much shorter length and extend upstream from shoulder 31 only a short distance, for example, below or up to the level of the upstream face 32 of the second snout 30.

The outer diameter of sleeve 20, when assembled as part of nozzle assembly 12, and prior to insertion into nozzle supply passage 22 in cutting head 20, is preferably slightly larger than the diameter of passage 22, and the upstream end 44 of sleeve 20 preferably extends a short distance past nozzle 18, but it need not do so, for the reasons set out below.

Nozzle supply passage 22, sleeve 20, nozzle 18 and set screw 16 are preferably symmetrical about their longitudinal axes and are of circular cross-sectional configurations, but they need not be. Bore 40 in nozzle 18, bore 34 is set screw 16, and drive recess 36 are preferably axially aligned, though they need not be as long as the fluid jet passing, during operation, through bore 34 is not interfered with as it travels through and exits nozzle assembly 12.

Drive recess 36 preferably is sized to be driveable by any conventional drive means such as an allen wrench or screwdriver, but it could assume other configurations so as to be driven by some other tool. Drive recess 36 need not be located on the longitudinal axis of set screw 16, in which case bore 34 of set screw 16 would extend to the downstream surface 48 of set screw 16. One working embodiment was tested at up to 60,000 psi (413 MPa) and did not leak. The working fluid was water. There is no reason to believe it would leak at pressure above 60,000 psi (413 MPa).

As to materials, the cutting head 10 and set screw 16 are formed from materials, such as stainless steel, which are strong enough to withstand design operating pressures plus normal safety margins, and which are resistant to corrosion from the working fluid and operating environment. Nozzle 18 is formed from synthetic sapphire, but other materials could be used depending on the particular operating pressures and working fluids used. Sleeve 20 is formed from UHMW-PE (ultra-high molecular weight polyethylene). At working pressures higher than 60,000 psi (413 MPa), soft metals could be used, such as bronze or brass.

As for the size of the components of this working embodiment, nozzle supply passage 22 and first snout 28 have respective diameters of

.125 and .124 inches, (3.175 and 3.150 mm) a radial clearance of .0005 inches (0.013 mm) therebetween. A smaller clearance would be of advantage. First snout 28 extends into passage 22.020 inches (0.51 mm) past the upstream end of threaded bore 24. Threaded bore 24 and the threaded shank 26 were about .160 inches (4.06 mm) in length and had at least three full threads, and preferably more, to prevent blowout of set screw 16 at operating pressure.

Second snout 30 and nozzle 18 have a diameter of .078 inches (1.98 mm) but this is not critical. Bore 40 in nozzle 18 has a diameter which is dictated by the particular job in hand, and typically runs from .005 to .025 inches (0.13 to 0.635 mm). The diameter of bore 34 is set screw 16 is, as a rule of thumb, at least twice the diameter of bore 40. Second snout 30 extends .030 inches (0.762 mm) past shoulder 31 of first snout 28, but this dimension is not critical.

The external diameter of sleeve 20, prior to assembly is .125 inches (3.175 mm) the same as the diameter of supply passage 22. Sleeve 20's internal diameter, prior to assembly, is O.76 inches (19.30 mm)--.002 inches (0.051 mm) smaller in diameter than snout 30 and nozzle 18, which it is designed to receive.

Thus, when, sleeve 20, nozzle 18 and snout 30 are assembled, as has been described, sleeve 20 snugly holds nozzle assembly 12 firmly assembled. When assembled, the external diameter of the sleeve 20 increases by about .002 inches, as the snout 30 and nozzle 18 are inserted into sleeve 20 which has an undersized internal diameter making the external diameter of the sleeve 20, when assembled, .002 inches (0.051 mm) greater in diameter than supply passage 22, When assembled, the upstream end of sleeve 20 extends .010 to .015 inches (0.254 to 0.381 mm) past the upstream end of nozzle 18.

Thus, this sizing of sleeve 20 serves triple purpose and solves three problems at the same time. That is, it holds sleeve 20, nozzle 18, and second snout 30 in an assembled relation, it forms a good seal therebetween, and it provides for the necessary oversizing of sleeve 20 as compared to passage 30 to effectuate a good seal therebetween also.

Of course, other ways of solving these problems are possible such as making the internal diameter of sleeve 20 snout the same as or slightly greater than the external diameter of nozzle 18 and second snout 30, and using a friction fit and/or adhesive to hold them together and form a seal therebetween. Then sleeve 20 could be made with the necessary oversize external diameter for a good seal with passage 22.

The internal diameter of the threaded bore 24 in cutting head 10 is larger than the assembled external diameter of the sleeve 20 to prevent interference therewith when nozzle assembly 12 is being assembled with cutting head 10.

As will be seen from Figure 2, the set screw 16, supply passage 22 and threaded bore 24 are physically uncomplicated, thereby making them very easy and low cost to machine, resulting in a simple, low cost nozzle assembly 12.

To assemble the nozzle assembly 12 to cutting head 10, nozzle assembly 12 is screwed into head 10 from the exterior of head 10 by applying a drive tool to drive recess 36 of set screw 16; the chamfer 46 on sleeve 20 aiding in insertion of the oversize sleeve 20 into supply passage 22. Thus, assembly, even in the field is fast, easy, foolproof and requires only a common tool such as an allen wrench or screwdriver. Removal is just as easy and only requires the set screw 16 to be backed out. Then the sleeve 20 and nozzle 18, which are inexpensive enough to be considered throw-away items; are blown out of the supply passage 22 by pressurising the fluid therein, although they could be caught and saved for examination, repair or possible re-use, if desired.

In operation, supply passage 22 is connected to any suitable source of working fluid at the desired operating pressure. The working fluid forces the flat surfaces 42,32 of nozzle 18 and second snout 30 tightly together, forming a seal therebetween. The working fluid also bears against the upstream end 44 of sleeve 20, thereby tending to force sleeve 20 downstream until sleeve 20 seats and seals against shoulder 31. Once stopped by shoulder 31, the sleeve 20 then tends to swell radially, both inwardly and outwardly, thereby firmly sealing against nozzle supply passage 22, second snout 30, and nozzle 18. It is important to note that the seals between sleeve 20 and shoulder 31, nozzle 18, second snout 30 and passage 22 grow tighter and more effective as the working fluid pressure increases.

Since the sleeve 20 tends to flow plastically under the working pressure, it will seal effectively even if the surfaces it contacts are scratched or irregular. In time, sleeve 20 will tend very gradually to flow through the very small clearance between first snout 28 and supply passage 22, but since such flow would be very slow, and since the upstream end 44 of sleeve 20 was chosen to extend past nozzle 18, sleeve 20 has a longitudinal length sufficient to compensate for any such downstream flow during the design life of nozzle assembly 12. Increased design life is easily achieved by either making sleeve 20 thicker, longer, or from a material which flows less under pressure than UHMW-PE or by reducing the clearance between first snout 28 and passage 22.

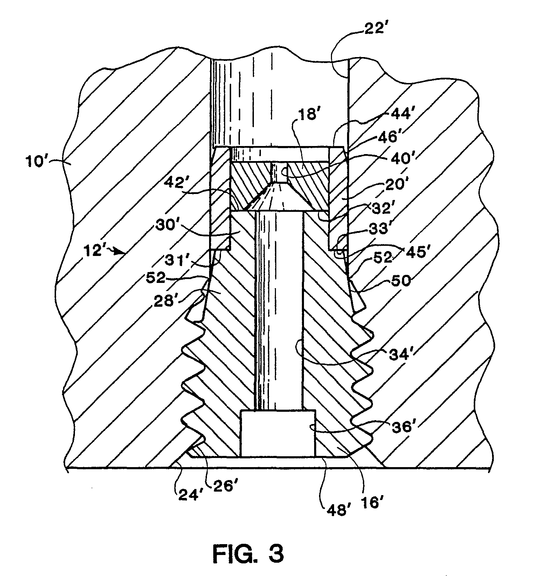

The embodiment of Figure 3, is identical to that shown in Figure 2 except as described below, and so that same parts are referred to by the same reference numerals but with a prime appended thereto. In this embodiment, a chamfer 50 has been provided on an enlarged snout 28'. Thus, as the set screw 16 is screwed into cutting head 10', the chamfer 50 of first snout 28' engages corner 52 on passageway 22' so preventing any tendency of sleeve 20' to flow downstream under working pressure past corner 52 of passage 22'.

Alternatively, a chamfer could be provided at the upstream end of threaded bore 24, and first snout 28 could be enlarged and have a square corner 33 adapted to engage such a chamfer when set screw 16 is tightened down to achieve the same end.

Since fluid flow is from the top to the bottom in Figures 2 and 3 references in the foregoing to "upstream" and "downstream" indicate flow towards the top and the bottom respectively.

## Claims

1. A fluid cutting jet nozzle assembly (12, 12') of assembly of the type arranged to be inserted into a fluid supply passageway (22, 22') of a cutting head (10, 10') and comprising:

a) jet-forming means (18, 18') for forming a fluid cutting jet;

b) nozzle body means (16, 16') defining a bore (34,34') through which said cutting jet passes in use of the jet nozzle assembly;

c) a first snout means (28, 28') extending upstream from said nozzle body means towards said jet-forming means;

d) a second snout means (30, 30') extending upstream from said first snout means towards said jet-forming means and being at least partly of smaller diameter than said first snout means;

e) a deformable sealing sleeve (20, 20') encircling said jet-forming means and in use, tending to deform radially inwardly and outwardly under fluid pressure; and

f) mounting means (26, 26') for mounting said nozzle body means in said passageway characterised in that an annular shoulder (31, 31') is defined at the transition between said first (28, 28') and second (30, 30') snout means, said jet-forming means (18, 18') has an external diameter at least approximately equal to the external diameter of said second snout means, said sealing sleeve (20, 20') being located on said shoulder and encircling said second snout means as well as said jet-forming means whereby in use, said sealing sleeve tends to flow downstream towards said shoulder under the effect of fluid pressure, thereby to form a seal between snout means, jet-forming means and fluid supply passageway (22, 22').

2. A fluid cutting jet nozzle assembly (12, 12') as claimed in claim 1, wherein said nozzle body means (16, 16') comprising a set screw which constitutes said mounting means (26, 26') and is provided with drive-engaging means (36, 36') which one arranged to cooperate with drive means to enable the assembly to be screwed into a threaded fluid supply passageway (22, 22').

3. A fluid cutting jet nozzle assembly (12, 12') as claimed in claim 1 or claim 2, wherein the inner diameter of said sealing sleeve (20, 20') is such that it grips both said second snout means (30, 30') and said jet-forming means (18, 18') so as to hold said assembly together even when the assembly is not mounted in said fluid supply passageway (22, 22').

4. A fluid cutting jet nozzle assembly (12, 12') as claimed in any preceding claim wherein the outer diameter of said sealing sleeve (20, 20') is larger than the outer diameter of said shoulder (31, 31').

5. A fluid cutting jet nozzle assembly (12, 12') as claimed in any preceding claim wherein said sealing sleeve (20, 20') extends from said shoulder (31, 31') to beyond the free end of said jet forming means (18, 18') prior to use of said assembly within said fluid supply passageway (22, 22').

6. A fluid cutting head (10,10') comprising a fluid supply passageway (22, 22') and a fluid cutting jet nozzle assembly (12, 12') as claimed in any of claims 1 to 5 mounted in said passageway, wherein a cavity is defined by said first snout means (28, 28') and passageway adjacent to said shoulder (31, 31').

7. A fluid cutting head (10') as claimed in claim 6 wherein said cavity is partially defined by a chamfered portion (500 of said first snout means (28') or passageway (22').

8. A fluid cutting head (10, 10') comprising a fluid supply passageway (22, 22') and a fluid cutting jet nozzle assembly (12, 12') as claimed in any of claims 1 to 5 mounted in said passageway, wherein either said first snout means (28') incorporates a chamfered portion (50) which engages a corner (52) of said passageway to prevent said sealing sleeve (20') from flowing downstream under working pressure past said corner or said passageway incorporates a chamfer portion which engages a corner of said first snout means to similarly prevent said sealing sleeve from flowing downstream under working pressure past said corner.

9. A fluid cutting head (10, 10') comprising a fluid supply passageway (22, 22') and a fluid cutting jet nozzle assembly (12, 12') as claimed in any of claims 1 to 5 wherein said assembly can be inserted and removed from said passageway from the exterior of said fluid cutting head.

## Patentansprüche

1. Fluidschneidstrahldüsenanordnung (12, 12') in einer Bauweise für zum Einsetzen in einen Fluidzuführungskanal (22, 22') eines Schneidkopfs (10, 10'), die aufweist:

a) eine strahlbildende Einrichtung (18, 18') zur Bildung eines Fluidschneidstrahls;

b) eine Düsenkörpereinrichtung (16, 16'), die eine Bohrung (34, 34') aufweist, durch welche ein Schneidstrahl beim Einsatz der Strahldüsenanordnung hindurchgeht;

c) eine erste Mundstückeinrichtung (28, 28'), die sich stromauf von der Düsenkörpereinrichtung zu der strahlbildenden Einrichtung erstreckt;

d) eine zweite Mundstückeinrichtung (30, 30'), die sich stromauf von der ersten Mundstückeinrichtung zu der strahlbildenden Einrichtung erstreckt und wenigstens teilweise einen kleineren Durchmesser als die erste Mundstückeinrichtung hat;

e) eine verformbare Dichtungshülse (20, 20'), die die strahlbildende Einrichtung umschließt und im Einsatz dazu neigt, sich unter dem Fluiddruck radial nach innen und nach außen zu verformen, und

   f) Halteeinrichtungen (26, 26') zum Halten der Düsenkörpereinrichtung in dem Kanal,

dadurch gekennzeichnet, daß an dem Übergang zwischen der ersten (28, 28') und der zweiten (30, 30') Mundstückeinrichtung eine Ringschulter (31, 31') gebildet ist, daß die strahlbildende Einrichtung (18, 18') einen Außendurchmesser hat, der wenigstens annähernd gleich dem Außendurchmesser der zweiten Mundstückeinrichtung ist, daß die dichtende Hülse (20, 20') an der Schulter angeordnet ist und die zweite Mundstückseinrichtung ebenso wie die strahlbildende Einrichtung umschließt, wodurch im Einsatz die abdichtende Hülse dazu neigt, stromab zu der Schulter unter der Wirkung des Fluiddrucks zu fließen, um dadurch eine Abdichtung zwischen der Mundstückseinrichtung, der strahlbildenden Einrichtung und dem Fluidzuführungskanal (22, 22') zu bilden.

2. Fluidschneidstrahldüsenanordnung (12, 12') nach Anspruch 1, bei welcher die Düsenkörpereinrichtung (16, 16') eine Klemmschraube aufweist, welche die Halteeinrichtung (26, 26') bildet und mit Treibeingriffseinrichtungen (36, 36') versehen ist, die beim Zusammenwirken mit Treibeinrichtungen vorgesehen werden, damit die Anordnung in einen mit Gewinde versehenen Fluidzuführungskanal (22, 22') geschraubt werden kann.

3. Fluidschneidstrahldüsenanordnung (12, 12') nach Anspruch 1 oder Anspruch 2, bei welcher der Innendurchmesser der abdichtenden Hülse (20, 20') derart bemessen ist, daß er sowohl an der zweiten Mundstückeinrichtung (30, 30') und an der strahlbildenden Einrichtung (18, 18') angreift, um so die Anordnung zusammenzuhalten, auch wenn diese nicht in dem Fluidzuführungskanal (22, 22') montiert ist.

4. Fluidschneidstrahldüsenanordnung (12, 12') nach einem vorhergehenden Anspruch, bei welcher der Außendurchmesser der abdichtenden Hülse (20, 20') größer als der Außendurchmesser der Schulter (31, 31') ist.

5. Fluidschneidstrahldüsenanordnung (12, 12') nach einem vorhergehenden Anspruch, bei welcher die abdichtende Hülse (20, 20') sich von der Schulter (31, 31') über das freie Ende der strahlbildenden Einrichtung (18, 18') vor dem Einsatz der Anordnung hinaus in dem Fluidzuführungskanal (22, 22') erstreckt.

6. Fluidschneidkopf (10, 10') mit einem Fluidzuführungskanal (22, 22') und einer Fluidschneidstrahldüsenanordnung (12, 12') nach einem der Ansprüche 1 bis 5, die in dem Kanal angeordnet ist, wobei von der ersten Mundstückeinrichtung (28, 28') und dem Kanal angrenzend an die Schulter (31, 31') ein Hohlraum gebildet wird.

7. Fluidschneidkopf (10') nach Anspruch 6, bei welchem der Hohlraum teilweise von einem abgefasten Abschnitt (50) der ersten Mundstückeinrichtung (28') oder des Kanals (22') gebildet wird.

8. Fluidschneidkopf (10, 10') mit einem Fluidzuführungskanal (22, 22') und einer Fluidschneidstrahldüsenanordnung (12, 12') nach einem der Ansprüche 1 bis 5, die in dem Kanal angeordnet ist, bei welchem entweder die erste Mundstückeinrichtung (28') einen Fasenabschnitt (50) aufweist, der an einer Kante (52) des Kanals angreift, um zu verhindern, daß die abdichtende Hülse (20') stromab unter dem Arbeitsdruck vorbei an der Kante fließt, oder der Kanal einen Fasenabschnitt aufweist, der an einer Kante der ersten Mundstückeinrichtung angreift, um in gleicher Weise zu verhindern, daß die abdichtende Hülse stromab unter dem Arbeitsdruck vorbei an der Kante fließt.

9. Fluidschneidkopf (10, 10') mit einem Fluidzuführungskanal (22, 22') und einer Fluidschneidstrahldüsenanordnung (12, 12') nach einem der Ansprüche 1 bis 5, bei welchem die Anordnung in den Kanal von außerhalb des Fluidschneidkopfs einsetzbar und daraus entfernbar ist.

**Revendications**

1. Montage d'une buse de coupe à jet de fluide (12, 12') du type conçu pour être inséré à l'intérieur du passage d'alimentation en fluide (22, 22') d'une tête de coupe (10, 10') et comprenant:

   a) des moyens formant un jet (18, 18') pour former un jet de fluide de coupe;

   b) des moyens formant un corps de buse (16, 16') définissant un alésage (34, 34') à travers lequel passe ledit jet de coupe utilisé dans l'ensemble formant buse;

   c) un premier moyen formant ajutage (28, 28') s'étendant vers l'amont à partir des moyens formant corps de buse vers lesdits moyens formant jet;

   d) un second moyen formant ajutage (30, 30') s'étendant vers l'amont à partir du premier moyen formant ajutage vers lesdits moyens formant jet et étant au moins en partie de plus petit diamètre que ledit premier moyen formant ajutage;

   e) un manchon d'étanchéité déformable (20, 20') entourant lesdits moyens formant jet et, en fonctionnement, tendant à se déformer radialement vers l'intérieur et vers l'extérieur sous l'action de la pression de fluide;

   f) des moyens de montage (26, 26') pour monter lesdits moyens formant corps de buse dans ledit passage, caractérisé en ce qu'un épaulement annulaire (31, 31') est défini à la transition entre lesdits premier (28, 28') et second (30, 30') moyens formant ajutage, lesdits moyens formant jet (18, 18') ont un diamètre externe au moins approximativement égal au diamètre extérieur dudit second moyen formant ajutage, ledit manchon (20, 20') étant disposé sur ledit épaulement et entourant ledit second moyen formant ajutage aussi bien que lesdits moyens formant jet de telle sorte qu'en fonctionnement, ledit manchon d'étanchéité a tendance à fluer vers l'aval en direction dudit épaulement sous l'effet de la pression de fluide, de telle sorte que se trouve former un joint entre les moyens formant ajutage, les moyens formant jet et le passage d'alimentation en fluide (22, 22').

2. Montage d'une buse de coupe à jet de fluide (12, 12') tel que revendiqué dans la revendication 1 dans lequel lesdits moyens formant corps de buse (16, 16') comportent une vis de réglage qui constitue ledit moyen de montage (26, 26') et comporte des moyens (36, 36') susceptibles de coopérer avec des moyens d'entraînement conçus pour coopérer avec un moyen d'entraînement pour permettre à l'ensemble d'être visser à l'intérieur d'un passage (22, 22') fileté d'alimentation en fluide.

3. Montage d'une buse de coupe à jet de fluide (12, 12') tel que revendiqué dans la revendication 1 ou la revendication 2 dans lequel le diamètre intérieur dudit manchon d'étanchéité (20, 20') est tel qu'il est ancré à la fois sur ledit second moyen formant ajutage (30, 30') et sur lesdits moyens formant jet (18, 18') de façon à maintenir ledit ensemble assembler même lorsque l'ensemble n'est pas monté dans ledit passage d'alimentation en fluide (22, 22').

4. Montage d'une buse de coupe à jet de fluide (12, 12') tel que revendiqué dans l'une quelconque des revendications précédentes dans lequel le diamètre extérieur dudit manchon d'étanchéité (20, 20') est plus grand que le diamètre extérieur dudit épaulement (31, 31').

5. Montage d'une buse de coupe à jet de fluide (12, 12') tel que revendiqué dans l'une quelconque des revendications précédentes dans lequel ledit manchon d'étanchéité (20, 20') s'étend depuis ledit épaulement (31, 31') jusqu'au-delà de l'extrémité libre desdits moyens formant jet (18, 18') avant que soit utilisé le montage à l'intérieur du passage d'alimentation en fluide (22, 22').

6. Tête de coupe alimentée en fluide (10, 10') comprenant un passage d'alimentation en fluide (22, 22') et un ensemble formant buse de jet de coupe (12, 12') tel que revendiqué dans une quelconque des revendications 1 à 5 monté dans ledit passage, dans laquelle une cavité est définie par ledit moyen formant premier ajutage (28, 28') et un passage adjacent dudit épaulement (31, 31').

7. Tête de coupe utilisant un fluide (10') telle que revendiquée dans la revendication 6 dans laquelle ladite cavité est partiellement définie par une partie chanfreinée (50') dudit premier moyen formant ajutage (28') ou par le passage (22').

8. Tête de coupe alimentée en fluide (10, 10') comprenant un passage d'alimentation en fluide (22, 22') et un ensemble formant buse de coupe à jet de fluide (12, 12') tel que revendiqué dans l'une quelconque des revendications 1 à 5 monté dans ledit passage, dans laquelle soit ledit premier moyen formant ajutage (28, 28') comporte une partie chanfreinée (50) qui coopère avec un coin (52) dudit passage pour empêcher ledit manchon d'étanchéité (20') de fluer vers l'aval sous l'action de la pression de travail et au-delà dudit coin soit ledit passage comporte une partie chanfreinée qui coopère avec un coin dudit moyen formant premier ajutage pour, de la même façon, empêcher que ledit manchon d'étanchéité ne flue vers l'aval sous l'action de la pression de travail au-delà dudit coin.

9. Tête de coupe à jet de fluide (10, 10') comprenant un passage d'alimentation en fluide (22, 22') et une buse de coupe à jet de fluide (12, 12') tels que revendiquée dans l'une quelconque des revendications 1 à 5 dans laquelle ledit ensemble peut être inséré dans et extrait dudit passage à partir de l'extérieur de ladite tête de coupe à jet de fluide.

**FIG. 1**

**FIG. 1a**

FIG. 2

FIG. 3